# EUROPÄISCHE PATENTANMELDUNG

(11) **EP 3 170 773 A1**
(43) Veröffentlichungstag der Anmeldung: **24.05.2017**
(21) Anmeldenummer: 15195194.4
(22) Anmeldetag: 18.11.2015
(51) Int. Cl.: B65G 1/137

(54) **VERFAHREN ZUM MANUELLEN KOMMISSIONIEREN MEHRERER ARTIKEL IN EINEM WARENLAGER**

(71) Anmelder: KNAPP Systemintegration GmbH, 8700 Leoben (AT)
(72) Erfinder: HOFBAUER, Wolfrum, 8101 Gratkorn (AT)
(74) Vertreter: Wirnsberger, Gernot

(57) **Zusammenfassung**

Die Erfindung betrifft ein Verfahren zum manuellen Kommissionieren mehrerer Artikel in einem Warenlager (1), wobei zumindest ein, insbesondere mehrere, autonome und mit Roll- und/oder Gleitmitteln ausgestattete Fahrzeuge (2) fahrerlos durch das Warenlager geleitet werden, wobei die Fahrzeuge (2) jeweils ein im Warenlager verfügbares Regalsystem (4), das optional mit bodenseitigen Roll- und/oder Gleitmitteln (5) ausgestattet ist, durch lösbare Kopplung an einer Unterseite des Regalsystems (4) aufnehmen können, sodass das Regalsystem (4) mit dem Fahrzeug (2) durch das Warenlager verfahrbar ist.

In einer ersten Variante ist vorgesehen, dass in mehreren Kommissionierstationen (7) kommissioniert wird und das Regalsystem (4) mit einem Fahrzeug (2) von einer Kommissionierstation zur nächsten geführt wird, um zumindest einen, vorzugsweise mehrere Kommissionieraufträge abzuarbeiten, wonach das Regalsystem (4) insbesondere zu einer Verpackungsstation geführt wird.

In einer zweiten Variante ist vorgesehen, dass aus einem stationären Lagersystem, in dem eine Vielzahl von Behältern mit jeweils gleichen Waren in den Behältern lagert, entsprechend zumindest einem Kommissionierauftrag Behälter entnommen und auf das Regalsystem (4) aufgeladen und mit einem Fahrzeug (2) zu einer Kommissionierstation (7) verfahren werden und/oder bodenseitig am Lagersystem positionierte und mit Behältern bestückte Regalsysteme (4) mit einem Fahrzeug (2) zu einer Kommissionierstation (7) verfahren werden, um einen Kommissionierauftrag abzuarbeiten.

## Beschreibung

Die Erfindung betrifft ein Verfahren zum manuellen Kommissionieren mehrerer Artikel in einem Warenlager, wobei zumindest ein, insbesondere mehrere, autonome und mit Roll- und/oder Gleitmitteln ausgestattete Fahrzeuge fahrerlos durch das Warenlager geleitet werden, wobei die Fahrzeuge jeweils ein im Warenlager verfügbares Regalsystem, das optional mit bodenseitigen Roll- und/oder Gleitmitteln ausgestattet ist, durch lösbare Kopplung an einer Unterseite des Regalsystems aufnehmen können, sodass das Regalsystem mit dem Fahrzeug durch das Warenlager verfahrbar ist.

Aus dem Stand der Technik ist es bekannt geworden, im Bereich der Logistik bzw. des Kommissionierens von Waren Regalsysteme einzusetzen, die mit einem kleiner bauenden, autonom fahrenden Fahrzeug innerhalb des Warenlagers an eine gewünschte Position transportierbar sind. Das bzw. die Fahrzeuge sind hierfür relativ klein gebaut und können an ein Regalsystem an dessen Unterseite lösbar ankoppeln, sodass nach Aufnahme des Regalsystems dieses mit dem Fahrzeug transportierbar ist. Hierfür kann gemäß US 2007/0288123 A1 vorgesehen sein, dass das Regalsystem vom unterhalb andockenden Fahrzeug aufgehoben wird. Bekannt sind auch andere Arten von verfahrbaren Regalsystemen, z. B. aus US 2015/0073589 A1 oder US 2014/0214234 A1.

Beim manuellen Kommissionieren von Waren in einem Warenlager ist eine möglichst hohe Effektivität in Bezug auf Anschaffungskosten und Produktivität erwünscht. Wird für ein neues Warenlager ein Kommissionierverfahren ausgewählt, sind mehrere Faktoren zu berücksichtigen. Eine wichtige Größe stellt die zu erwartende Zahl der Auftragszeilen pro Stunde oder einer anderen Zeiteinheit dar. Eine andere wichtige Größe ist die Anzahl der Stellplätze. Je nachdem, in welchem Bereich die Anforderungen für ein neues Warenlager samt Kommissionierverfahren liegen, sind verschiedene Lösungen von Vorteil. Eine Lösung, die bei einer niedrigen Anzahl von Auftragszeilen, aber großer Anzahl von Stellplätzen effektiv ist, kann sich bei umgekehrter Situation (viele Auftragszeilen und wenige Stellplätze) durchaus nicht mehr rechnen. Neben der Effektivität einzelner Kommissionierverfahren im realen Betrieb sind auch die Investitionskosten zu berücksichtigen, die vom jeweiligen Kommissionierverfahren abhängen und sich kostenmäßig durchaus erheblich unterscheiden können.

Die aus dem Stand der Technik bekannten Kommissionierverfahren zum manuellen Kommissionieren erlauben zwar insgesamt betrachtet eine Abdeckung des gesamten Bereiches von niedrigen bis hin zu hohen Auftragszeilen pro Stunde sowie niedriger bis hoher Anzahl an Stellplätzen, sind aber nicht oder nicht in ausreichendem Maße kostengünstig.

Hier setzt die Erfindung an. Aufgabe der Erfindung ist es, ein Verfahren der eingangs genannten Art anzugeben, mit dem in einem breiten Bereich sehr kostengünstig gearbeitet werden kann.

Diese Aufgabe wird gelöst, wenn bei einem Verfahren der eingangs genannten Art in mehreren Kommissionierstationen kommissioniert wird und das Regalsystem mit einem Fahrzeug von einer Kommissionierstation zur nächsten geführt wird, um zumindest einen, vorzugsweise mehrere Kommissionieraufträge abzuarbeiten, wonach das Regalsystem insbesondere zu einer Verpackungsstation geführt wird.

Ein mit einem erfindungsgemäßen Verfahren erzielter Vorteil ist insbesondere darin zu sehen, dass mit dem vorgesehenen Fahrzeug samt Regalsystem eine erhebliche Anzahl von Kommissionieraufträgen abgearbeitet werden kann, wobei das Verfahren weitgehend unabhängig von der Anzahl an Auftragszeilen pro Stunde sowie der Anzahl von Stellplätzen in der Anschaffung bzw. Durchführung kostengünstiger ist als bestehende Kommissionierverfahren. Das Fahrzeug nimmt dabei einzelne Regalsysteme nach Ankopplung mit und führt diese zu einer Kommissionierstation, wo zumindest eine Auftragszeile eines Kommissionierauftrages abgearbeitet wird. Anschließend, soweit erforderlich, nimmt das Fahrzeug das Regalsystem auf und fährt die nächste Kommissionierstation an, um zumindest eine weitere nächste Auftragszeile des Kommissionierauftrages abzuarbeiten. Durch das flexible, mit dem Fahrzeug verfahrbare Regalsystem wird die Möglichkeit geboten, mehrere Aufträge gleichzeitig abzuarbeiten, was zu einer gewünscht hohen Effektivität in Bezug auf Anschaffungskosten und Betrieb führt.

Entsprechend der vorstehenden Lösung erfolgt das Verfahren des Regalsystems mit dem Ziel. Dies bedeutet, dass die zu kommissionierenden Waren als Quelle in den Kommissionierstationen verfügbar sind, wohingegen am Regalsystem die für die Aufträge kommissionierten Waren gelagert sind, welche das Ziel darstellen. In einer alternativen Lösung kann aber bei einem Verfahren der eingangs genannten Art auch vorgesehen sein, dass aus einem stationären Lagersystem, in dem eine Vielzahl von Behältern mit beispielsweise jeweils gleichen Waren in den Behältern lagert, entsprechend zumindest einem Kommissionierauftrag Behälter entnommen und auf das Regalsystem aufgeladen und mit einem Fahrzeug zu einer Kommissionierstation verfahren werden und/oder am Lagersystem positionierte und mit Behältern bestückte Regalsysteme mit einem Fahrzeug zu einer Kommissionierstation verfahren werden, um einen Kommissionierauftrag abzuarbeiten. Die Entnahme der Regalsysteme aus dem Lagersystem erfolgt dabei automatisiert.

Bei dieser alternativen Lösung dient das Regalsystem dazu, die zu kommissionierenden Waren, also die Quelle, zu einer Kommissionierstation zu bringen, damit dort ein Kommissionierer aus dem Behälter die erforderliche Artikelanzahl entnehmen kann. Es hat sich gezeigt, dass auch in dieser Verfahrensvariante eine hohe Effektivität gegeben ist. Ähnlich der ersten Variante profitiert dieses Kommissionierungskonzept davon, dass mit den bewegten Regalsystemen eine Vielzahl von Artikeln für die Kommissionierung gleichzeitig bewegt wird, was ausschlaggebend ist.

Für die Bewegung der Regalsysteme sind fahrerlose Fahrzeuge vorgesehen, die nicht schienengebunden sind. Vielmehr sind die Fahrzeuge so ausgebildet, dass sich diese frei in einem Warenlager bewegen können. In der Regel ist hierfür vorgesehen, dass eine zentrale Einheit dem Fahrzeug unter Berücksichtigung eines Kommissionierauftrages Zielpunkte im Warenlager vorgibt. Bei der zentralen Einheit handelt es sich üblicherweise um eine Recheneinheit, beispielsweise einen Server. Die Recheneinheit kann so ausgebildet sein, dass eingehende Bestellungen aufgenommen und auf Basis der Bestellungen Kommissionieraufträge gebildet werden; hierfür kann aber auch eine gesonderte weitere Recheneinheit vorgesehen sein, die mit der ersten Recheneinheit in Verbindung steht. Die Recheneinheit kann mit dem zumindest einen Fahrzeug drahtlos, z. B. über Funk, verbunden sein, um diesem Zielpunkte vorzugeben. Die Navigation zu einem Ziel- bzw. Endpunkt erfolgt im Fahrzeug selbst mit einem Bordcomputer. In diesem Zusammenhang kann auch vorgesehen sein, dass mit dem Fahrzeug zum Verfahren entlang eines vorgegebenen Verfahrweges örtliche Strukturen des Warenlagers erkannt und unter Abgleich dieser Strukturen mit einem hinterlegten Abbild des Warenlagers eine Steuerung des Fahrzeuges erfolgt. Das bzw. die Fahrzeuge sind zweckmäßigerweise mit optosensorischen Einrichtungen ausgestattet, welche eine Distanzmessung zu Strukturen eines Warenlagers, beispielsweise Regalen, Wänden oder dergleichen erlauben. Eine derartige Distanzmessung kann beispielsweise mit Laserlicht und Reflexion desselben von den örtlichen Strukturen des Warenlagers erfolgen. Aus den entsprechenden Distanzmessungen lässt sich nach Abgleich mit einem hinterlegten Warenlager eine Position des Fahrzeuges bestimmen. Das Warenlager kann hierfür in der Recheneinheit oder am Fahrzeug selbst digital hinterlegt sein.

Die Regalsysteme, welche mit den Fahrzeugen verfahren werden, sind bodenseitig bevorzugt mit Rädern, Rollen oder anderen Roll- und/oder Gleitmitteln ausgebildet, es können aber auch Regalsysteme eingesetzt werden, die bodenseitig Steher aufweisen. Eine Kopplung an die Fahrzeuge erfolgt dabei an einer Unterseite der Regalsysteme. Die Kopplung kann so ausgebildet sein, dass das Regalsystem bei Bedarf auch neigbar ist, beispielsweise um eine Entnahme von Artikeln zu vereinfachen. Das Regalsystem kann aber auch geneigte Fächer aufweisen.

Weitere Merkmale, Vorteile und Wirkungen der Erfindung ergeben sich aus den nachstehend dargestellten Ausführungsbeispielen. In den Zeichnungen, auf welche dabei Bezug genommen wird, zeigen:
Fig. 1 bis 3 Kommissionierkonzepte gemäß dem Stand der Technik;
Fig. 4 ein Fahrzeug samt Regalsystem;
Fig. 5 eine schematische Darstellung zu einem erfindungsgemäßen Kommissionierverfahren;
Fig. 6 ein Diagramm zu verschiedenen Kommissionierlösungen ohne Gebäudeinvestition;
Fig. 7 ein Diagramm zu verschiedenen Kommissionierlösungen mit Gebäudeinvestition;
Fig. 8 bis 11 ein Vergleich einer erfindungsgemäßen Kommissionierlösung mit bekannten Kommissionierlösungen für eine verschiedene Anzahl von Aufträgen;
Fig. 12 eine schematische Darstellung zu einem erfindungsgemäßen Kommissionierverfahren.

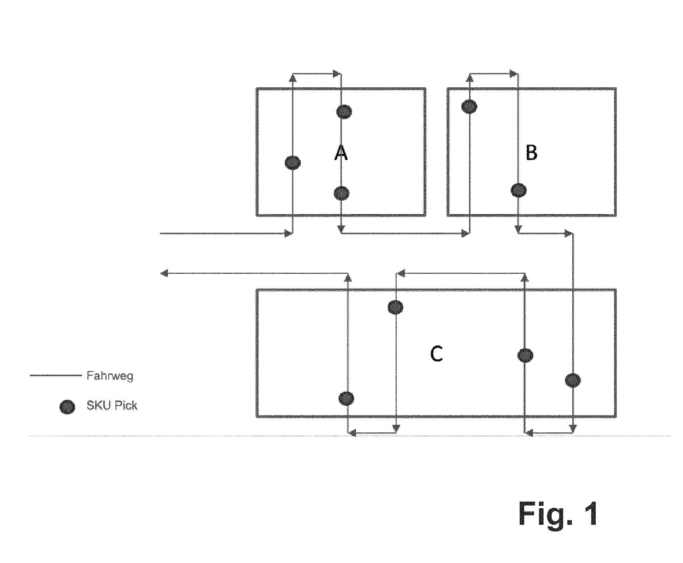

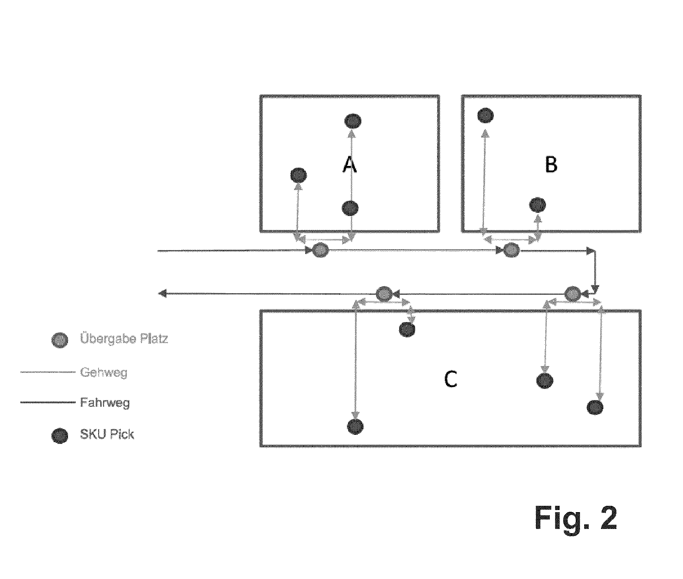

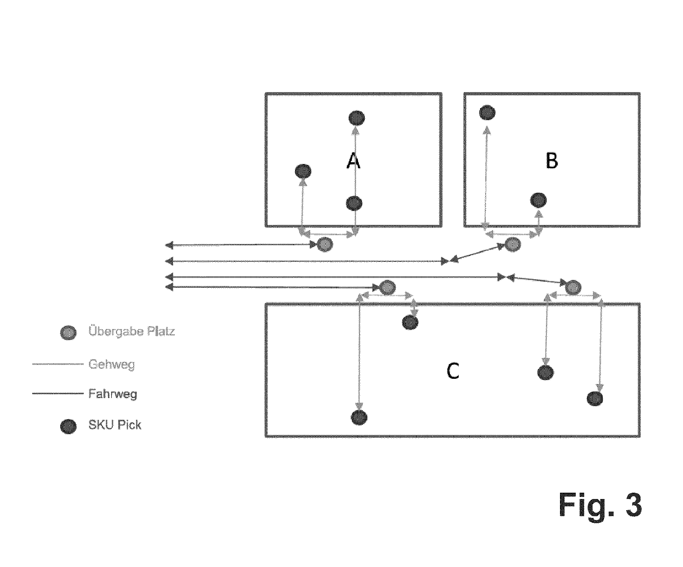

In Fig. 1 bis 3 sind verschiedene Kommissionierkonzepte dargestellt, wie diese an sich aus dem Stand der Technik bekannt sind. In Fig. 1 ist ein Warenlager 1 ersichtlich, das in mehrere Bereiche A, B, C eingeteilt ist. In den einzelnen Bereichen A, B, C befinden sich Waren, die kommissioniert werden. Die drei Bereiche A, B, C stehen hierbei gleichzeitig für die übliche Benennung nach der Schnelligkeit des Umschlags bzw. A-, B- und C-Läufer. Während gemäß Fig. 1 nach Pick & Go kommissioniert wird, stellt Fig. 2 einen ringförmigen Routenzug dar, der einer herkömmlichen Stationskommissionierung entspricht. Hierbei sind in der Nähe der Bereiche A, B, C Übergabeplätze vorgesehen. Fig. 3 zeigt einen sternförmigen Routenzug, der ebenfalls aus dem Stand der Technik bekannt ist.

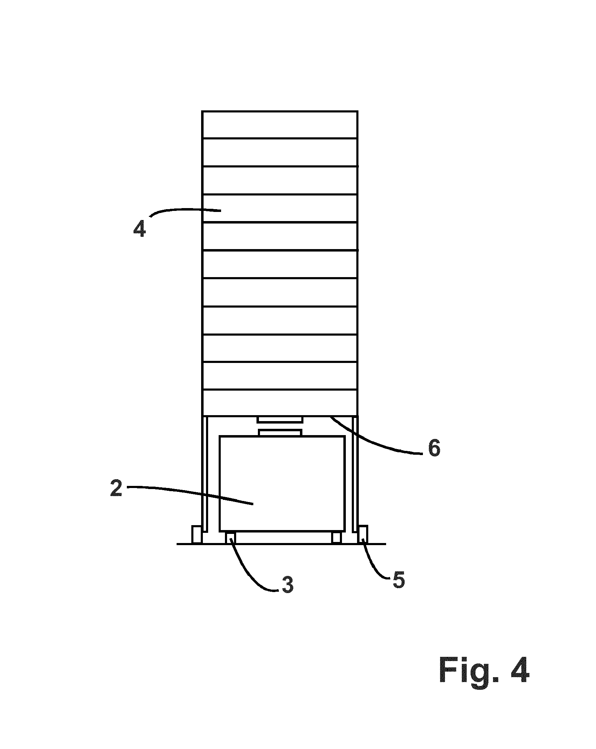

In Fig. 4 ist ein Fahrzeug 2 samt einem Regalsystem 4 dargestellt. Bei dem Fahrzeug 2 handelt es sich um ein autonom verfahrbares Fahrzeug 2, das keinen Fahrer benötigt. Das Fahrzeug 2 weist bodenseitig Roll- und/oder Gleitmittel 3 auf, die wie dargestellt als Räder ausgebildet sein können. Die Roll- und/oder Gleitmittel 3 sind so ausgebildet bzw. gelagert, dass das Fahrzeug 2 beliebig navigiert werden kann und insbesondere Kurven fahren und wenden kann. Das Fahrzeug 2 umfasst einen Bordcomputer, der über Funkverbindung, WLAN oder eine andere drahtlose Verbindung mit einem Server oder einer anderen Recheneinheit in Verbindung steht. Der Server koordiniert in der Regel eine Vielzahl von Fahrzeugen 2, die durch ein Warenlager 1 bewegt werden. Zur Orientierung sowie Navigation ist das Fahrzeug 2 mit geeigneten Sensoren ausgestattet, die eine räumliche Erfassung der Umgebung oder zumindest markanter Punkte ermöglichen. Hierfür sind optosensorische Einrichtungen geeignet, beispielsweise eine Laserlichtquelle sowie ein Sensor, der von Wänden, Regalen oder anderen Punkten bzw. Flächen eines Warenlagers 1 reflektiertes Laserlicht aufnimmt, um dadurch verschiedene Distanzen zu bestimmen. Hierfür sind üblicherweise mehrere entsprechende optosensorische Einrichtungen vorgesehen. Aus den ermittelten Daten kann durch den Bordcomputer am Fahrzeug 2 ein Abgleich mit einem hinterlegten Abbild des Warenlagers 1 erfolgen, um den aktuellen Standort zu bestimmen und ein nächstes Ziel anzusteuern. Der Abgleich der entsprechenden Daten kann so rasch erfolgen, dass quasi eine Echtzeitnavigation möglich ist. Jedenfalls sollte vorgesehen sein, dass ein Datenabgleich so rasch erfolgt, dass zwischen einem Ziel und einem nächsten Ziel zumindest ein mehrfacher Abgleich erfolgt, um das Fahrzeug 2 stets unter Kontrolle zu halten. Eine andere Art der optosensorischen Erkennung der Umgebung des Fahrzeuges 2 ist selbstverständlich auch möglich, beispielsweise mittels Bilderkennung und Vergleich mit aufgenommenen Bildern durch Algorithmen und daraus abgeleiteter Positionsbestimmung.

Das Fahrzeug 2 kann mit dem Regalsystem 4 zusammenwirken. Das Regalsystem 4 weist bodenseitig wie dargestellt ebenfalls Roll- und/oder Gleitmittel 5 auf, die aber nicht zwingend sind. Für ein Zusammenwirken mit dem Fahrzeug 2 sind nicht näher dargestellte Aufnahmen an einer Unterseite 6 des Regalsystems 4 vorgesehen. Diese Aufnahmen wirken mit einem korrespondierenden, ausfahrbaren Stück am Fahrzeug 2 zusammen. Die Aufnahme erfolgt dabei so, dass das Fahrzeug 2 an die Unterseite 6 des Regalsystems 4 fährt, wonach das Verbindungsstück ausgefahren wird, um eine lösbare Kopplung mit dem Regalsystem 4 zu erreichen. Das Regalsystem 4 ist dann so am Fahrzeug 2 gekoppelt, dass dieses nach wie vor mit den Roll- und/oder Gleitmitteln 5 am Boden steht, allerdings durch das Fahrzeug 2 verfahren werden kann. Dadurch ist eine mehrfache Auflage und somit optimale Stabilität gegeben. Auf die konkrete Verbindung zwischen Fahrzeug 2 und Regalsystem 4 kommt es diesbezüglich aber nicht an; jede beliebige Art der Verbindung ist möglich, solange das Regalsystem 4 mit dem Fahrzeug 2 verfahren werden kann. Ist das Regalsystem 4 z. B. mit Stehern ausgebildet, dann ist das Fahrzeug 2 zweckmäßigerweise mit einem Heber ausgestattet, welcher das Regelsystem 4 soweit anheben kann, dass dieses mit dem darunter befindlichen Fahrzeug 2 verfahren werden kann.

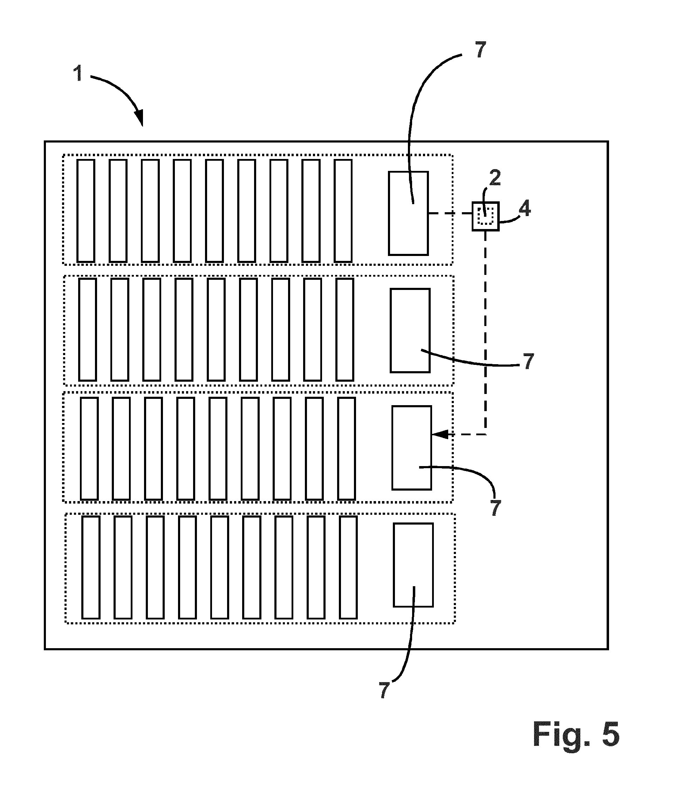

In Fig. 5 ist eine erste Variante eines erfindungsgemäßen Verfahrens stark schematisiert dargestellt. Im Warenlager 1 sind mehrere Kommissionierstationen 7 dargestellt, wie dies beispielsweise gemäß Fig. 1 bis 3 der Fall sein kann. Im Unterschied zum Stand der Technik wird jedoch ein Regalsystem 4 mit einem Fahrzeug 2 zwischen den einzelnen Kommissionierstationen 7 bewegt. Da das Regalsystem 4 mehrere Fächer aufweist, in welchen zumindest ein Auftrag abgelegt werden kann, ergibt sich im Vergleich mit üblichen Kommissionierverfahren eine wesentlich höhere Kosteneffektivität.

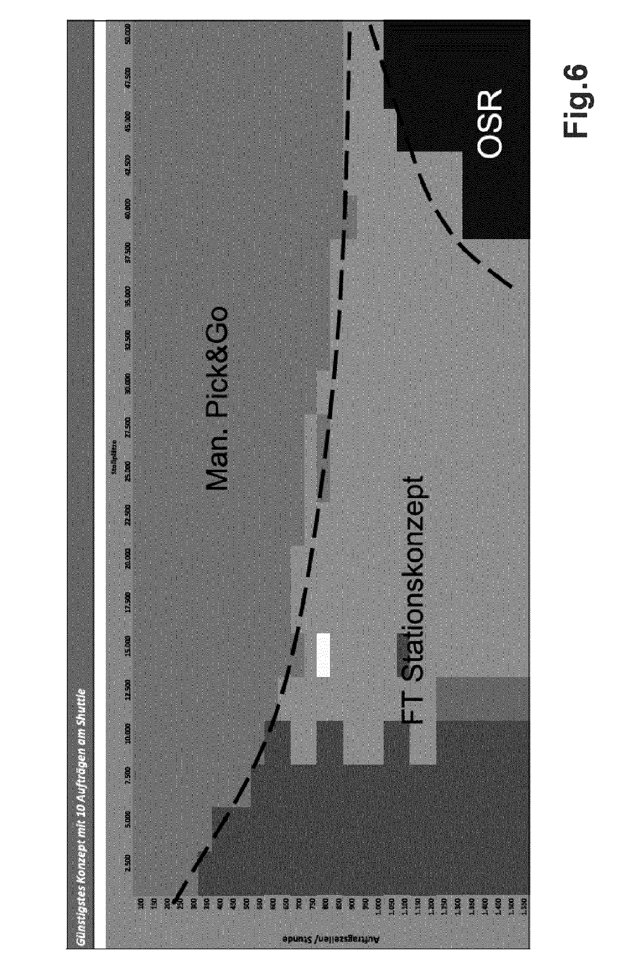

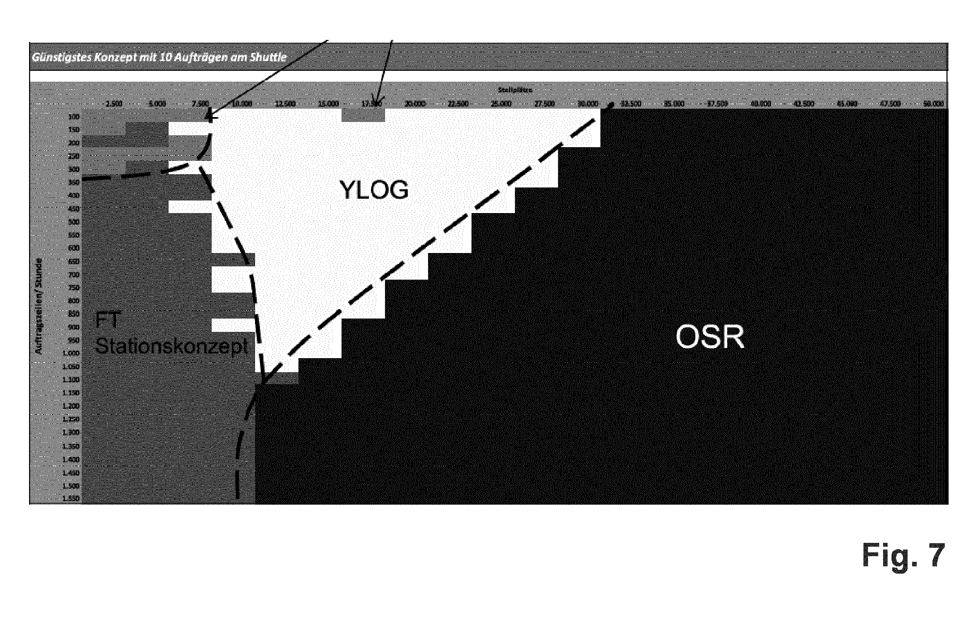

In Fig. 6 und 7 sind bekannte Kommissionierkonzepte verglichen. Wie ersichtlich ist, ist die Wahl eines geeigneten Konzeptes von der Anzahl der Auftragszeilen pro Stunden sowie den Stellplätzen abhängig. Gemäß Fig. 6 ist in einem breiten Bereich ein manuelles Pick & Go von Vorteil, wohingegen ein Hochregallager OSR insbesondere dann zweckmäßig ist, wenn bei hoher Anzahl von Stellplätzen relativ wenige Auftragszeilen pro Stunden zu bearbeiten sind. Auch übliche Fördertechniklösungen (FT Stationskonzept) und weitere Konzepte finden Anwendung. Der Vergleich gemäß Fig. 6 beinhaltet allerdings noch nicht die Gebäudekosten. Sind diese inkludiert, ergibt sich für den gleichen Vergleich ein wesentlich besseres Kosten-Nutzen-Verhältnis für vollautomatisierte Hochregallager OSR oder YLOG, wie dies aus Fig. 7 ersichtlich ist.

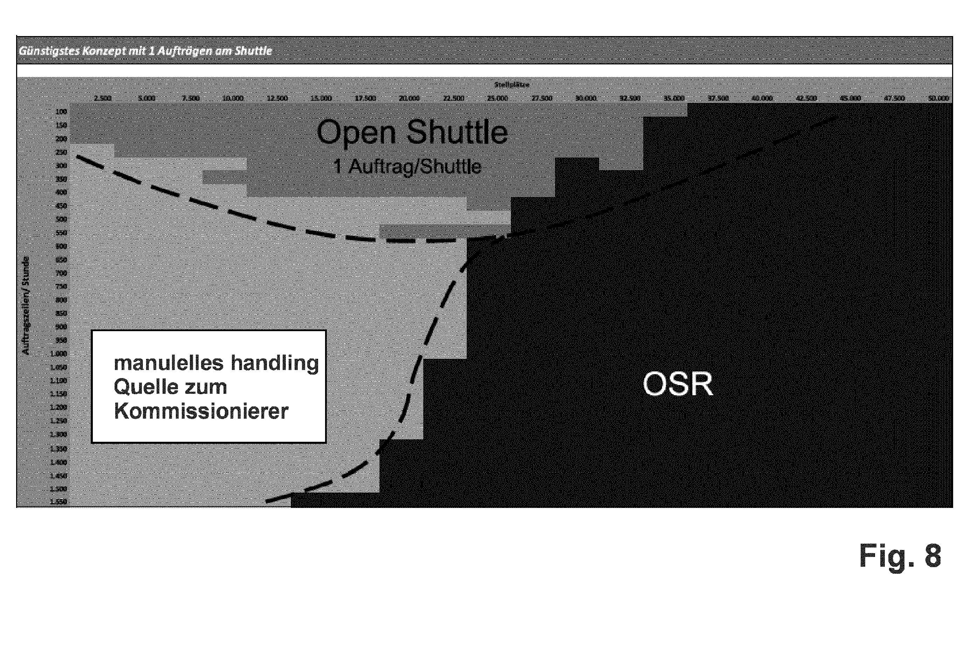

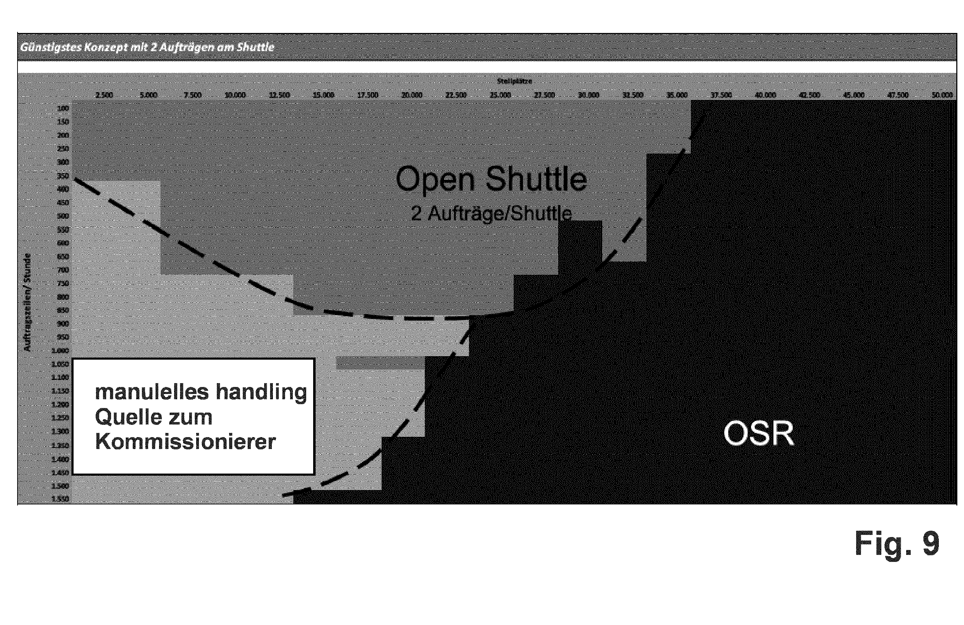

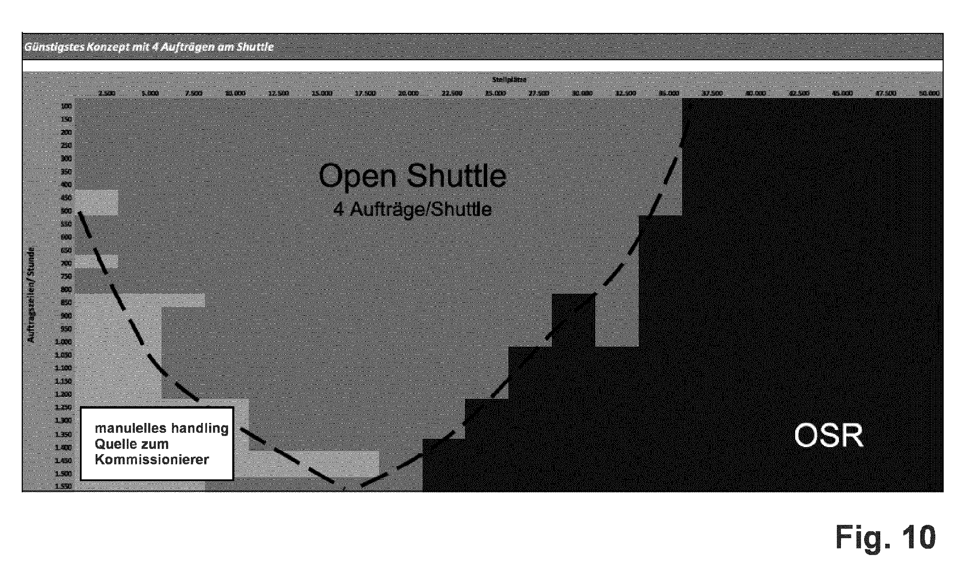

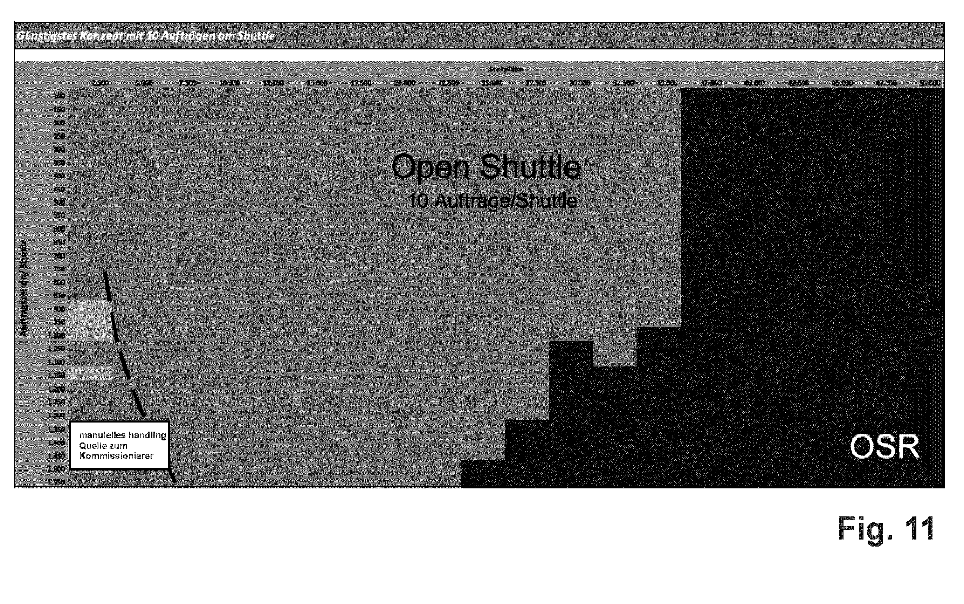

In Fig. 8 bis 11 ist in einem entsprechenden Vergleich ein erfindungsgemäßes Verfahren gemäß Anspruch 1 einbezogen, wobei die Auswirkungen für eine unterschiedliche Anzahl an Aufträgen am Regalsystem dargestellt sind. Wie ersichtlich ist, verdrängt selbst bei einem Auftrag eine erfindungsgemäße Lösung bereits in Teilbereichen konventionelle Lösungen. Sind jedoch vier und mehr Aufträge an einem einzelnen Regalsystem 4 lokalisiert, so zeigt sich die Überlegenheit des erfindungsgemäßen Verfahrens gegenüber automatisierten oder teilautomatisierten Lösungen.

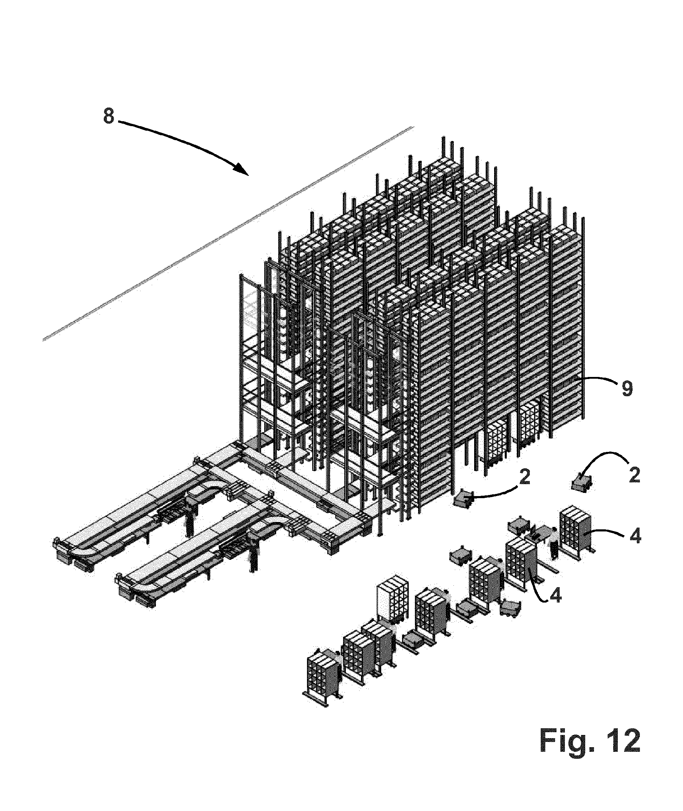

In einer alternativen Variante lässt sich ein erfindungsgemäßes Verfahren auch realisieren, wenn nicht das Ziel (wie vorstehend erläutert), sondern mit dem Regalsystem 4 die Quelle bewegt wird. Hierfür kann ein stationäres Lagersystem 8 entsprechend adaptiert bzw. ergänzt werden, wie dies in Fig. 12 dargestellt ist. In diesem Fall können beispielsweise auf das Regalsystem 4 einzelne Behälter 9 aufgegeben werden, die im stationären Lagersystem 8 gelagert sind. Jeder Behälter 9 umfasst dabei mehrere Artikel, die in diesem gelagert sind und beim Kommissionieren von einem Kommissionierer manuell entnommen werden. Die einzelnen Behälter 9 werden mit einem in einer Ebene des als Hochregals ausgebildeten stationären Lagersystems 8 verfahrbaren Lademittel entnommen. Je nach Ausbildung des Hochregallagers kann dieses Lademittel über einen Auszug auch die jeweilige Ebene verlassen oder es wird alternativ ein Behälter 9 auf einen Aufzug aufgegeben. Anschließend wird das Regalsystem 4 entsprechend mit Behältern 9 befüllt, mit einem Fahrzeug 2 gekoppelt und schließlich zu einzelnen Kommissionierstationen 7 verfahren, wo die manuelle Kommissionierung erfolgt. Alternativ oder auch ergänzend kann auch vorgesehen sein, wie dies aus Fig. 12 ersichtlich ist, dass neben den Behältern 9 des Hochregals, in welchen jeweils eine bestimmte Anzahl an Artikeln lagert, bodenseitig Regalsysteme 4 mit weiteren Artikeln vorgesehen sind, wobei die Regalsysteme 4 mit einem Fahrzeug 2 zu einem Kommissionierer gebracht werden können. Auch in dieser Variante ergeben sich massive Vorteile aufgrund des Bewegens mehrerer Quellen gleichzeitig.

## Patentansprüche

1. Verfahren zum manuellen Kommissionieren mehrerer Artikel in einem Warenlager (1), wobei zumindest ein, insbesondere mehrere, autonome und mit Roll- und/oder Gleitmitteln (3) ausgestattete Fahrzeuge (2) fahrerlos durch das Warenlager (1) geleitet werden, wobei die Fahrzeuge (2) jeweils ein im Warenlager (1) verfügbares Regalsystem (4), das optional mit bodenseitigen Roll- und/oder Gleitmitteln (5) ausgestattet ist, durch lösbare Kopplung an einer Unterseite (6) des Regalsystems (4) aufnehmen können, sodass das Regalsystem (4) mit dem Fahrzeug (2) durch das Warenlager (1) verfahrbar ist, **dadurch gekennzeichnet, dass** in mehreren Kommissionierstationen (7) kommissioniert wird und das Regalsystem (4) mit einem Fahrzeug (2) von einer Kommissionierstation (7) zur nächsten geführt wird, um zumindest einen, vorzugsweise mehrere Kommissionieraufträge abzuarbeiten, wonach das Regalsystem (4) insbesondere zu einer Verpackungsstation geführt wird.

2. Verfahren zum manuellen Kommissionieren mehrerer Artikel in einem Warenlager (1), wobei zumindest ein, insbesondere mehrere, autonome und mit Roll- und/oder Gleitmitteln (3) ausgestattete Fahrzeuge (2) fahrerlos durch das Warenlager (1) geleitet werden, wobei die Fahrzeuge (2) jeweils ein im Warenlager (1) verfügbares Regalsystem (4), das optional mit bodenseitigen Roll- und/oder Gleitmitteln (5) ausgestattet ist, durch lösbare Kopplung an einer Unterseite (6) des Regalsystems (4) aufnehmen können, sodass das Regalsystem (4) mit dem Fahrzeug (2) durch das Warenlager (1) verfahrbar ist, **dadurch gekennzeichnet, dass** aus einem stationären Lagersystem (8), in dem eine Vielzahl von Behältern (9) mit beispielsweise jeweils gleichen Waren in den Behältern (9) lagert, entsprechend zumindest einem Kommissionierauftrag Behälter (9) entnommen und auf das Regalsystem (4) aufgeladen und mit einem Fahrzeug (2) zu einer Kommissionierstation (7) verfahren werden und/oder bodenseitig am Lagersystem (8) positionierte und mit Behältern (9) bestückte Regalsysteme (4) mit einem Fahrzeug (2) zu einer Kommissionierstation (7) verfahren werden, um einen Kommissionierauftrag abzuarbeiten.

3. Verfahren nach Anspruch 1 oder 2, **dadurch gekennzeichnet, dass** eine zentrale Einheit dem Fahrzeug (2) unter Berücksichtigung eines Kommissionierauftrages Zielpunkte im Warenlager (1) vorgibt.

4. Verfahren nach Anspruch 3, **dadurch gekennzeichnet, dass** mit dem Fahrzeug (2) zum Verfahren entlang eines vorgegebenen Verfahrweges örtliche Strukturen des Warenlagers (1) erkannt und unter Abgleich dieser Strukturen mit einem hinterlegten Abbild des Warenlagers (1) eine Steuerung des Fahrzeuges (2) erfolgt.
